# FASCICULE DE BREVET EUROPEEN

(11) **EP 0 422 260 B1**
(45) Date de publication et mention de la délivrance du brevet: **25.08.1993**
(21) Numéro de dépôt: 89118744.5
(22) Date de dépôt: 09.10.1989
(51) Int. Cl.: G01N 1/24

(54) **Procédé et dispositif de détermination simultanée de la teneur en oxygène et de la pression résiduelle dans un emballage**
Verfahren und Vorrichtung zur gleichzeitigen Bestimmung des Sauerstoffgehaltes und des Restdruckes in einer Verpackung
Method and device for simultaneously determining the oxygen content and the residual pressure in a package

(43) Date de publication de la demande: 17.04.1991
(73) Titulaire: SOCIETE DES PRODUITS NESTLE S.A., 1800 Vevey (CH)
(72) Inventeur: Hürlimann, Peter, CH-3510 Konolfingen (CH); van Meir, Eugène, CH-1700 Fribourg (CH)

(56) Documents cités:
- DE-A- 3 505 490
- US-A- 3 849 070
- US-A- 4 133 736

## Description

L'invention concerne un procédé pour la détermination simultanée de la teneur en oxygène et de la pression résiduelle d'un emballage. L'invention concerne en outre le dispositif pour la mise en oeuvre de ce procédé.

La demande de brevet DE-OS 34 39 778 concerne déjà un dispositif permettant de mesurer la pression et la teneur en oxygène dans un échantillon. Ce dispositif est cependant assez compliqué, travaille sous vide, ne garantit pas une mesure exacte, car on ne sait pas si une quantité de gaz suffisante a été introduite dans le système de mesure et il peut conduire à des obstructions de conduites à cause d'un déplacement de poudre.

Le procédé et le dispositif, objet de la présente invention, permettent de pallier à ces inconvénients. Le dispositif selon l'invention est relativement simple, d'un maniement aisé, travaille à la pression atmosphérique et garantit dans tous les cas qu'un volume de gaz suffisant de l'emballage a été déplacé pour permettre une mesure exacte.

L'invention concerne un procédé de détermination simultanée de la teneur en oxygène et de la pression résiduelle dans un emballage, dans lequel on effectue une mesure de pression sur ledit emballage avec un moyen de prélèvement de gaz et on mesure en aval dudit moyen et d'une vanne à deux voies la teneur en oxygène en déplaçant le gaz résiduel dans un système de mesure d'oxygène suivie d'une chambre de compression, qui sont remis à la pression atmosphérique grâce à ladite vanne au moment de ladite mesure.

Par emballage, on entend tout type d'emballage, aussi bien souple que rigide, tels que sachets, boîtes de conserve ou emballages en verre. Les emballages peuvent aussi bien contenir des poudres que des liquides. Ces emballages peuvent être sous vide ou à pression atmosphérique, par exemple pour conditionner des poudres de lait, des céréales, du café et autres. Par emballage sous vide, on entend des emballages ayant une pression absolue d'au moins 250 mbar.

L'intérêt du procédé selon l'invention est qu'il permet d'effectuer très rapidement les deux mesures précitées, avec grande sûreté et avec une bonne garantie quant à la valeur de la teneur en oxygène trouvée.

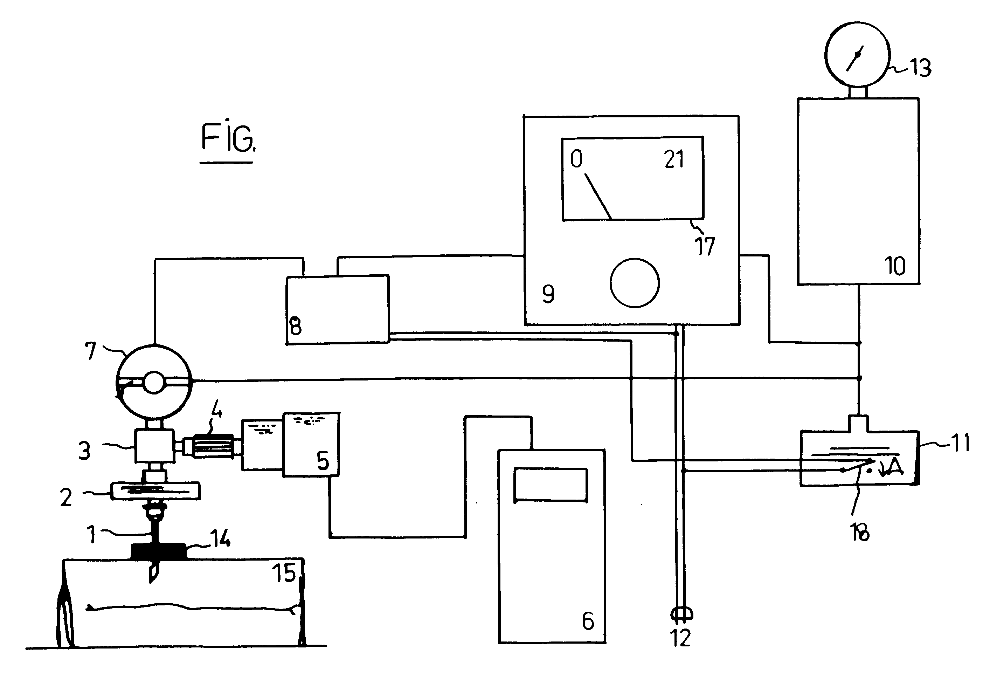

Le moyen de prélèvement de gaz est une aiguille creuse, comme dans le document allemand cité ci-dessus, qu'il suffit d'enfoncer dans l'emballage au moment de la mesure. Le procédé sera davantage explicité en référence à la figure.

Le but du procédé est d'être sûr d'avoir déplacé suffisamment de gaz de l'emballage pour avoir la valeur exacte de la teneur en oxygène. A cet effet, on réalise une légère surpression de maximum 100 mbar sur la chambre de compression et on effectue ensuite la mesure par remise à la pression atmosphérique.

Cette valeur minimale de 100 mbar a été fixée au préalable et on détermine ensuite le volume de la chambre de compression permettant de donner la valeur exacte de la teneur en oxygène.

L'invention concerne en outre le dispositif pour la mise en oeuvre du procédé comprenant un moyen de prélèvement de gaz, en dérivation un capteur de pression et un système de mesure de pression et en aval du moyen de prélèvement de gaz une vanne à deux voies, une pompe à vide pour déplacer le gaz résiduel de l'emballage, un système de mesure de l'oxygène et une chambre de compression reliée à la vanne à deux voies pour la remise à la pression atmosphérique. Ce moyen de prélèvement de gaz est une aiguille creuse qui permet la succion du gaz résiduel hors de l'emballage, grâce en outre à la pompe à vide. La chambre à compression comporte un manomètre pour y mesurer la surpression minimale garantissant un déplacement de gaz suffisant de l'emballage pour être sûr de l'exactitude de la mesure de la teneur en oxygène. La pompe à vide utilisée est une pompe à membrane car elle a un volume mort très faible qui ainsi ne risque pas de fausser la mesure de la teneur en oxygène.

Le volume de la chambre de compression est défini par la surpression maximum tolérable sur le système de mesure d'oxygène et par la quantité minimale du gaz à déplacer pour obtenir des résultats exacts. Le volume est avantageusement compris entre 0,2 à 0,8 litre, de préférence de l'ordre de 0,3 à 0,4 litre.

Le dispositif selon l'invention est prévu aussi bien pour la mesure sur des emballages souples sous vide que pour des boîtes contenant du lait en poudre ou de l'extrait de café. Dans ce cas, pour éviter un passage de la poudre dans le dispositif, il est prévu entre le moyen de prélèvement de gaz et la vanne à deux voies un filtre. Le système de mesure de l'oxygène est sensible à des surpressions. On prévoit par conséquent un commutateur de sécurité entre la pompe à vide et la chambre de compression. Ce commutateur coupe la pompe à vide lorsque le manomètre de la chambre de compression indique une surpression de 100 mbar environ.

La suite de la description est faite en référence au schéma unique représentant le dispositif selon l'invention.

Le dispositif comprend une aiguille creuse (1), reliée à un filtre (2) et à un raccordement (3). En dérivation, on a une connexion (4), un capteur de pression (5) et un appareil de mesure de la pression (6). La vanne à deux voies (7) est disposée entre le raccordement (3) et la pompe à vide (8). En aval de la pompe se trouve le système de mesure de l'oxygène (9), la chambre de compression (10), comprenant un manomètre (13) et le commutateur de sécurité (11). Les éléments (8), (9) et (11) sont reliés à la prise électrique.

Avant de faire fonctionner le dispositif selon l'invention, il faut étalonner le système de mesure de l'oxygène (9). Pour ce faire, on met la pompe (8) en route, on relie l'aiguille (1) à une source d'azote et on met la vanne (7) en position verticale. après quelques secondes, lorsque le manomètre (13) indique 80 mbar, on remet le système à pression atmosphérique et on règle le O sur (9). L'air contenant 21% d'oxygène, on répète l'opération précédente en laissant simplement l'aiguille (1) à l'air libre. Lorsque le manomètre (13) indique 80 mbar, on met la vanne (7) en position horizontale et on règle sur (9) l'aiguille à 21. On sait d'autre part qu'avec un volume de la chambre de compression de 0,35 litre tel qu'utilisé, une surpression d'environ 80 mbar sur ladite chambre, permet de donner une valeur exacte de la teneur en oxygène dans l'emballage considéré.

Pour faire une mesure réelle, on remonte l'aiguille (1) et on y dispose dessous un emballage (15) sur lequel on colle un morceau de mousse (14) pour faire étanchéité. La pompe à vide (8) est en marche, la vanne (7) est en position de la Figure, on abaisse l'aiguille pour percer l'emballage (15) et on lit la pression sur l'appareil (6). On ouvre ensuite la vanne (7) et la pompe à vide (8) déplace le gaz résiduel vers l'appareil de mesure de l'oxygène (9). Lorsque le manomètre (13) indique 80 mbar on remet la vanne (7) en position de la figure de manière à arrêter le déplacement de gaz résiduel de l'emballage et pour revenir à la pression atmosphérique dans le système de mesure d'oxygène. On lit alors la valeur de la teneur en oxygène sur l'échelle (17) de l'appareil (9).

Si on dépasse 100 mbar de surpression dans la chambre (10), le contacteur (18) du commutateur (11) est déplacé selon la flèche A, et la pompe s'arrête car le courant électrique est coupé. Comme appareil de mesure d'oxygène, on utilise soit un dispositif Helantec, soit Servomex. L'appareil de mesure de pression est par exemple un appareil Keller.

On dispose ainsi selon l'invention d'un appareil simple, très performant, rapide, sûr, travaillant à la pression atmosphérique et qu'on peut disposer sur une ligne de fabrication pour contrôler périodiquement certains emballages.

## Revendications

1. Procédé de détermination simultanée de la teneur en oxygène et de la pression résiduelle dans un emballage (15) dans lequel on effectue une mesure de pression sur ledit emballage (15) avec un moyen de prélèvement de gaz (1) caractérisé en ce qu'on on mesure en aval dudit moyen (1) et d'une vanne à deux voies (7) la teneur en oxygène en déplaçant le gaz résiduel dans un système de mesure d'oxygène (9) suivi d'une chambre de compression (10), qui sont remis à la pression atmosphérique grâce à ladite vanne (7) au moment de ladite mesure.

2. Procédé selon la revendication 1, caractérisé en ce qu'on prélève le gaz au moyen d'une aiguille creuse.

3. Procédé selon l'une des revendications 1 et 2, caractérisé en ce qu'on travaille à une surpression de maximum 100 mbar.

4. Dispositif pour la mise en oeuvre du procédé selon l'une des revendications 1 à 3 comprenant un moyen de prélèvement de gaz (1), caractérisé en ce qu'il comprend en dérivation un capteur de pression (5) et un système de mesure de pression (6) et en aval du moyen de prélèvement de gaz (1) une vanne à deux voies (7), une pompe à vide (8) pour déplacer le gaz résiduel de l'emballage, un système de mesure de l'oxygène et une chambre de compression (10) reliée à la vanne à deux voies (7) pour la remise à la pression atmosphérique.

5. Dispositif selon la revendication 4, caractérisé en ce que le moyen de prélèvement de gaz (1) est une aiguille creuse (1).

6. Dispositif selon l'une des revendications 4 et 5, caractérisé en ce que la pompe à vide (8) est une pompe à membrane.

7. Dispositif selon l'une des revendications 4 à 6, caractérisé en ce que la chambre de compression (10) a un volume compris entre 0,2 et 0,8 litre.

8. Dispositif selon l'une des revendications 4 à 7, caractérisé en ce qu'il comprend un filtre (2) entre le moyen de prélèvement de gaz (1) et la vanne à deux voies (7).

9. Dispositif selon l'une des revendications 4 à 8, caractérisé en ce qu'il comprend un commutateur de sécurité (11) entre la pompe à vide (8) et la chambre de compression (10).

10. Dispositif selon l'une des revendications 4 à 9, caractérisé en ce que la chambre de compression (10) comprend un manomètre (13) pour la mesure de la pression relative.

## Claims

1. A process for the simultaneous determination of the oxygen content and the residual pressure in a pack (15), in which the pressure in the pack (15) is measured with a means (1) for removing gas, characterized in that the oxygen content is measured downstream of said means (1) and a two-way valve (7) by displacement of the residual gas into an oxygen measuring system (9) followed by a compression chamber (10) which are reset to atmospheric pressure by said valve (7) during said measurement.

2. A process as claimed in claim 1, characterized in that the gas is removed by a hollow needle.

3. A process as claimed in claim 1 or 2, characterized in that it is carried out at an excess pressure of at most 100 mbar.

4. An apparatus for carrying out the process claimed in any of claims 1 to 3 comprising a means (1) for removing gas, characterized in that it comprises a pressure sensor (5) and a pressure measuring system (6) in a branched arrangement and, downstream of the means (1) for removing gas, a two-way valve (7), a vacuum pump (8) for displacing the residual gas from the pack, an oxygen measuring system and a compression chamber (10) connected to the two-way valve (7) for resetting to atmospheric pressure.

5. An apparatus as claimed in claim 4, characterized in that the means (1) for removing gas is a hollow needle (1).

6. An apparatus as claimed in claim 4 or 5, characterized in that the vacuum pump (8) is a membrane pump.

7. An apparatus as claimed in any of claims 4 to 6, characterized in that the compression chamber (10) has a volume of 0.2 to 0.8 litre.

8. An apparatus as claimed in any of claims 4 to 7, characterized in that it comprises a filter (2) between the means (1) for removing gas and the two-way valve (7).

9. An apparatus as claimed in any of claims 4 to 8, characterized in that it comprises a safety switch (11) between the vacuum pump (8) and the compression chamber (10).

10. An apparatus as claimed in any of claims 4 to 9, characterized in that the compression chamber (10) comprises a manometer for measuring the relative pressure.

## Patentansprüche

1. Verfahren zur gleichzeitigen Bestimmung des Sauerstoffgehalts und des Restdrucks in einer Verpackung (15), bei welchem an der Verpackung (15) eine Druckmessung mit einer Gasentnahmeeinrichtung (1) vorgenommen wird, dadurch gekennzeichnet, daß hinter dieser Einrichtung (1) und einem Zweiwegeventil (7) der Sauerstoffgehalt gemessen wird, indem das Restgas in ein Sauerstoffmeßsystem (9) bewegt wird, auf welches eine Kompressionskammer (10) folgt, wobei das Sauerstoffmeßsystem (9) und die Kompressionskammer (10) zum Zeitpunkt dieser Messung durch das Ventil (7) auf atmosphärischen Druck gebracht werden.

2. Verfahren nach Anspruch 1, dadurch gekennzeichnet, daß das Gas mit Hilfe einer hohlen Nadel entnommen wird.

3. Verfahren nach einem der Ansprüche 1 und 2, dadurch gekennzeichnet, daß mit einem Überdruck von maximal 100 mb gearbeitet wird.

4. Vorrichtung zur Durchführung des Verfahrens nach einem der Ansprüche 1 bis 3 mit einer Gasentnahmeeinrichtung (1), dadurch gekennzeichnet, daß sie in einer Abzweigung einen Druckfühler (5) und ein Druckmeßsystem (6) und hinter der Gasentnahmeeinrichtung (1) ein Zweiwegeventil (7), eine Vakuumpumpe (8) zur Bewegung des Restgases aus der Verpackung, ein Sauerstoffmeßsystem und eine Kompressionskammer (10) aufweist, die mit dem Zweiwegeventil (7) zur Rückstellung auf den atmosphärischen Druck verbunden ist.

5. Vorrichtung nach Anspruch 4, dadurch gekennzeichnet, daß die Gasentnahmeeinrichtung (1) eine hohle Nadel (1) ist.

6. Vorrichtung nach einem der Ansprüche 4 und 5, dadurch gekennzeichnet, daß die Vakuumpumpe (8) eine Membranpumpe ist.

7. Vorrichtung nach einem der Ansprüche 4 bis 6, dadurch gekennzeichnet, daß die Kompressionskammer (10) ein Volumen von 0,2 bis 0,8 Liter hat.

8. Vorrichtung nach einem der Ansprüche 4 bis 7, dadurch gekennzeichnet, daß sie zwischen der Gasentnahmeeinrichtung (1) und dem Zweiwegeventil (7) ein Filter (2) aufweist.

9. Vorrichtung nach einem der Ansprüche 4 bis 8, dadurch gekennzeichnet, daß sie zwischen der Vakuumpumpe (8) und der Kompressionskammer (10) einen Sicherheitsschalter (11) aufweist.

10. Vorrichtung nach einem der Ansprüche 4 bis 9, dadurch gekennzeichnet, daß die Kompressionskammer (10) ein Manometer (13) zur Messung des relativen Drucks aufweist.
